Europäisches Patentamt

European Patent Office

Office européen des brevets

(19)

(11) Publication number: 0 390 256

A1

## (12) EUROPEAN PATENT APPLICATION

(21) Application number: 90200658.4

(22) Date of filing: 20.03.90

(51) Int. Cl.5: B65G 47/248

(30) Priority: 29.03.89 NL 8900769

(43) Date of publication of application:
03.10.90 Bulletin 90/40

(84) Designated Contracting States:
AT BE CH DE DK ES FR GB GR IT LI LU NL SE

(71) Applicant: Speciaal-Machinefabriek J.H. van Uitert B.V.
Industriestraat 14-16 Postbus 156
NL-5100 AD Dongen(NL)

(72) Inventor: van Uitert, Johannes Hendrikus
Vaartweg 33
NL-5109 RB 's-Gravenmoer(NL)

(74) Representative: Lips, Hendrik Jan George, Ir. et al
HAAGSCH OCTROOIBUREAU Breitnerlaan 146
NL-2596 HG Den Haag(NL)

(54) Device for rotating articles.

(57) A device for rotating articles, as e.g. containers in the shape of bottles, tins and such like, said device comprising two guiding elements (1) for guiding the articles along a helical path of movement so that the articles are rotated around an axis parallel to the direction of movement, said guiding element (1) being provided with opposite positioned helical surfaces which are engaging each other. Said elements (1) being pressed together by means of a U-shaped clamping member (3), the ends of the legs (5) of which are provided with bent portions (6) directed towards each other.

FIG. 1

## Device for rotating articles

The invention relates to a device for rotating articles, as e.g. containers in the shape of bottles, tins and such like, said device comprising two guiding elements for guiding the articles along a helical path of movement so that the articles are rotated around an axis parallel to the direction of movement, said guiding elements being provided with opposite positioned helical surfaces, means being present for holding said elements together.

Such a device is known by GB-A-1,533,581. In case of this known device the helical surfaces of both elements are distanced from each other and said elements are mounted in a cylindrical block which is forming part of the passage through which the articles will pass.

In view of this an accurate positioning and mounting of the elements in the cylindrical block will be necessary because the reliable working of the device will depend on the distance between both pairs of opposite helical surfaces. This distance not only depends on the right shape of the two guiding elements, but also on the internal diameter of said cylindrical block and, as already said, from the accurate mounting of said elements in said block.

The object of the invention is to provide a device which is more simple of construction and mounting.

To that end the device according to the invention is characterized in that the helical surfaces of both elements are engaging each other, a groove debouching in at least one of both engaging surfaces and extending along the length of said element, said groove itself either together with the groove in the opposite element having, as seen in cross section, mainly the shape of the article to be handled.

So the device comprises substantially two elements which as such can be manufactured e.g. by milling given surfaces of a rod of a solid material, as in particular synthetic material, in the right shape.

It is preferred when both elements are provided with a groove. By this the depth of both grooves is minimal and the manufacture easy. This can be further enhanced when both elements are heaving the same shape.

A particular easy mounting can be obtained when the two elements are enclosed by a U-shaped clamping member, the ends of the legs of which are provided with bent portions directed towards each other.

In this case the U-shaped member can be made from synthetic material and the ends of the legs, being provided with the bent portions, may run somewhat to each other when they are unloaded. When bringing the two elements into said clamping member, the legs of this will be bent somewhat from each other so that after mounting said elements the helical surfaces of these will be fixedly engaging each other. By this the mounting of said elements is particularly simple.

Obviously said U-shaped member will not extend along the whole length of the two elements, but two or more clamping members can be used positioned at some distance from each other.

In case of the device according to the present invention it is also possible to direct jets of air or liquid onto the articles passing through the device. By this the friction between the device and the articles can be decreased.

In a simple way the jets of air or liquid can be directed to said articles by means of holes applied in said elements, to which holes pipelines are connected. In a simple way the holes may make an angle with the direction of movement of the articles so that the working of the jets of air or liquid is made optimal.

Further the walls of the groove through which the articles pass may be provided with ridges running in longitudinal direction so that the contact area between the surfaces of the groove and the articles can be reduced. By this less friction will occur between the article and the device when the article is passing through this.

The invention is further described by means of an embodiment shown in the drawing, in which:

Fig. 1 shows an end view of the device according to the invention; and

Figs. 2 and 3 show perspective views of the two elements before these are brought together.

The device shown in the drawing comprises two equally shaped elements 1 from which the helical surfaces 2 are pressed against each other. The elements 1 are held together by means of the U-shaped clamping member 3, comprising the body 4, the legs 5 and the portions 6 extending from these legs and directed towards each other. When no elements 1 are present within the clamping member 3 the legs 5 of this will make an arcuate angle with the body 4.

In each surface 2 of said elements 1 a groove 7 is provided such that the grooves 7 together are forming a channel through which a not shown article may pass.

In case of the shown embodiment this article will be rotated over 180° when passing through the device. The rotation takes place around the axis 8 which in this case is a straight line.

It will be obvious, however, that the axis 8 also may be curved or may consist of joined straight portions. Obviously also any other angle of rotation is possible, the length of the device being proportional to the angle of rotation which has to be realized.

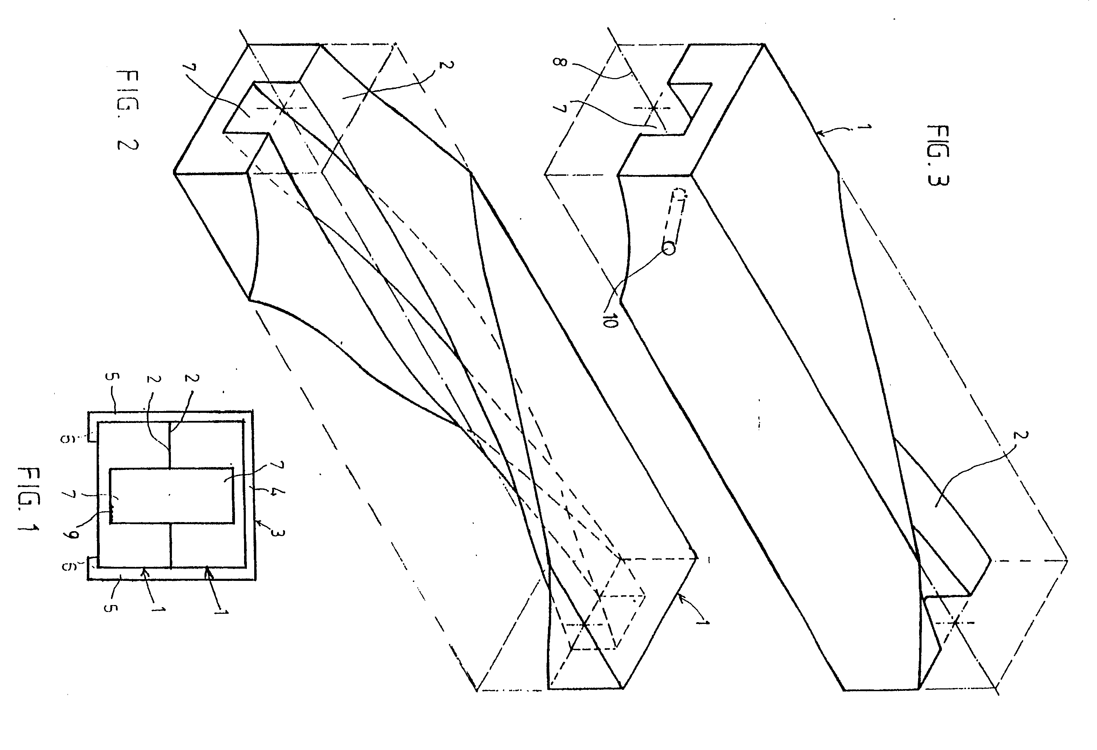

The walls of the groove, being formed by the elements 1, can be provided with ribs 9, some of these being indicated in Fig. 1. By this the friction between said walls and an article passing through the groove can be decreased.

Decreasing of the friction can be further obtained by providing bores 10 in the elements 1, through which bores jets of air or liquid can be spread onto the article passing through the groove 7. In Fig. 3 only one bore is indicated but of course more bores can be present and these bores can be connected with a pipeline for supplying air or liquid. The bores 10 may be at right angles to the wall of the groove but may also make arcuate angles with said wall so that the direction of the jets of air or liquid are directed somewhat in the direction of movement of the articles passing through the groove.

All these possibilities, however, will be obvious for an expert and need no further description.

**Claims**

1. Device for rotating articles, as e.g. containers in the shape of bottles, tins and such like, said device comprising two guiding elements (1) for guiding the articles along a helical path of movement so that the articles are rotated around an axis parallel to the direction of movement, said guiding elements (1) being provided with opposite positioned helical surfaces (2), means (3) being present for holding said elements (1) together, characterized in that the helical surfaces (2) of both elements (1) are engaging each other, a groove (7) debouching in at least one of both engaging surfaces and extending along the length of said element, said groove (7) itself either together with the groove (7) in the opposite element (1) having, as seen in cross section, mainly the shape of the article to be handled.

2. Device according to claim 1, characterized in that both elements (1) are provided with a groove (7).

3. Device according to claim 2, characterized in that both elements (1) are heaving the same shape.

4. Device according to one of the preceding claims, characterized in that the two elements (1) are enclosed by a U-shaped clamping member (3), the ends of the legs (5) of which are provided with bent portions (6) directed towards each other.

5. Device according to claim 4, characterized in that the U-shaped member (3) is made from synthetic material, the ends of the legs (5), being provided with the bent portions (6) running somewhat to each other wen they are unloaded.

6. Device according to one of the preceding claims, characterized in that jets of air or liquid are directed onto the articles passing through the device.

7. Device according to claim 1, characterized in that holes (10) are applied in said elements, to which holes pipelines are connected.

8. Device according to claim 7, characterized in that the holes are making an angle with the direction of movement of the articles passing through the device.

9. Device according to one of the preceding claims, characterized in that the walls of the groove (7) through which the articles pass, are provided with ridges (9) running in longitudinal direction of the groove.

FIG. 3

FIG. 2

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | GB-A-1 533 581 (THOMAS HILL ENG. CO.)<br>* Whole document * | 1 | B 65 G 47/248 |
| A | | 2 | |
| Y | CH-A- 482 610 (B. LECUREUX)<br>* Column 4, lines 5-63; fig. * | 1 | |
| A | | 2 | |
| A | US-A-3 823 803 (A.I. LUBIN)<br>* Abstract; fig. * | 1,2,3 | |
| X | FR-A-2 223 265 (REBOUL-SOFRA S.A.)<br>* Claims 7,8,11,12,13,15; fig. * | 1,2 | |
| A | FR-A-1 280 399 (WESTERN ELECTRIC CO.)<br>* Abstract; fig. * | 1,6,7,8 | |
| A | US-A-3 469 432 (A.D. SMITH et al.)<br>* Column 6, lines 45-50; figure 6 * | 9 | |
| A | US-A-2 905 295 (A.W. ANDERSON)<br>* Whole document * | 1,3 | **TECHNICAL FIELDS SEARCHED (Int. Cl.5)**<br><br>B 65 G |

The present search report has been drawn up for all claims

| Place of search | Date of completion of the search | Examiner |
|---|---|---|
| THE HAGUE | 25-06-1990 | VAN ROLLEGHEM F.M. |

EPO FORM 1503 03.82 (P0401)